# FASCICULE DE BREVET EUROPEEN

(11) **EP 0 493 152 B1**
(45) Date de publication et mention de la délivrance du brevet: **06.11.1996**
(21) Numéro de dépôt: 91403229.7
(22) Date de dépôt: 28.11.1991
(51) Int. Cl.: B60G 17/033

(54) **Dispositif automatique de commande d'un correcteur hydraulique de hauteur d'une suspension de train arrière de véhicule automobile, et suspension mixte équipée d'un tel dispositif**
Automatisches Steuergerät für eine hydraulische Niveaureguliereinrichtung einer Hinterachsaufhängung eines Kraftfahrzeug und damit ausgerüstete Mischaufhängung
Automatic hydraulic height corrector device for a rear wheel suspension and a suspension equipped with such a device

(30) Priorité: 28.12.1990 FR 9016482
(43) Date de publication de la demande: 01.07.1992
(73) Titulaire: AUTOMOBILES PEUGEOT, 75116 Paris (FR); AUTOMOBILES CITROEN, 92200 Neuilly-sur-Seine (FR)
(72) Inventeur: Denis, Richard, F-94600 Choisy le Roi (FR)
(74) Mandataire: Durand, Yves Armand Louis

(56) Documents cités:
- FR-A- 2 168 074
- GB-A- 815 175

## Description

La présente invention se rapporte à une suspension de train arrière de véhicule automobile, et concerne plus particulièrement un dispositif automatique de commande d'un correcteur de hauteur d'une telle suspension.

On a proposé depuis longtemps des trains arrière de véhicule dont la suspension est constituée par un élément hydropneumatique porteur et un ressort métallique, qui sont interposés entre la caisse du véhicule et au moins un bras articulé supportant l'une des roues du véhicule. Ces suspensions sont couramment équipées d'un accumulateur hydraulique raccordé à l'élément porteur, ainsi que d'un correcteur de hauteur temporisé qui agit sur l'élément porteur pour ajuster la hauteur de la suspension en fonction de la charge supportée par le train arrière.

Toutefois, les correcteurs de hauteur connus sont commandés par des dispositifs automatiques tels que par exemple comprenant un ressort de torsion reliant élastiquement le tiroir temporisé à un organe de commande solidaire des déplacements de la roue, de sorte que les débattements de courte durée ne provoquent pas de correction.

Une solution possible pour que le déclenchement du correcteur soit sensible à un faible débattement de longue durée, correspondant à une faible variation de charge consiste à prévoir un ressort précontraint pour la transmission du mouvement de l'organe de commande au tiroir temporise: une telle solution est décrite dans le document EP-A-300869. Cependant, avec les suspensions mixtes actuelles dont le débattement en détente est plus important que le débattement en attaque, la réalisation d'un tel ressort précontraint est difficilement possible.

Par conséquent, l'invention a pour but de proposer un dispositif automatique de commande d'un correcteur de hauteur d'une suspension par exemple mixte, qui soit simple et qui assure un ajustement précis de la hauteur de la suspension, quelle que soit la charge du véhicule.

A cet effet, l'invention a pour objet un dispositif automatique de commande d'un correcteur hydraulique de hauteur d'une suspension de train arrière de véhicule automobile, du type comprenant un tiroir temporisé de correction de la hauteur de la suspension, et un organe ou levier raccordé d'une part au tiroir par l'intermédiaire de moyens élastiques et d'autre part à un élément de la suspension solidaire d'une roue, de façon que le tiroir est déplacé pour les variations de hauteur de longue durée de la suspension, caractérisé en ce que les moyens élastiques comprennent des premiers et des seconds moyens élastiques précontraints ayant une course limitée par des butées ou analogues, la précontrainte des premiers moyens élastiques étant inférieure à celle des seconds moyens élastiques.

On comprend déjà qu'avec de tels moyens élastiques précontraints, la course la plus longue des moyens élastiques est limitée par une butée et le reste de la course est absorbé par un moyen élastique additionnel.

Selon une autre caractéristique de l'invention, les premier et second moyens élastiques sont montés en série.

On précisera ici que les premiers moyens élastiques sont constitués par un ressort hélicoîdal de flexion monté par enroulement autour d'un axe fixe, et dont les extrémités sont croisées de façon à enserrer d'une part un axe mobile relié au second moyen élastique et d'autre part à un levier coudé solidaire du tiroir temporisé.

L'invention est encore caractérisée en ce que lesdites butées limitent la course de déformation des premiers moyens élastiques dans le sens de la détente de la suspension, et les seconds moyens élastiques sont montés de manière à se détendre lorsque la suspension travaille en attaque, les butées limitant la course des seconds moyens élastiques dans le sens de leur détente.

Selon une autre caractéristique de l'invention, les seconds moyens élastiques comprennent un corps en forme de capsule ou cartouche cylindrique à l'intérieur de laquelle une tige de commande raccordée à l'organe ou levier précité est montée coulissante, un second ressort précontraint qui est logé dans la cartouche cylindrique avec l'une de ses extrémités reposant sur la tige et son autre extrémité venant en appui sur une rondelle d'arrêt fixée à l'intérieur de la cartouche, ainsi qu'une molette vissée sur la tige de commande et venant, lorsque ledit second moyen élastique est au repos, en butée contre ledit corps.

Selon encore une autre caractéristique de l'invention, la tige de commande et le levier précités sont raccordés par l'intermédiaire d'une rotule, de façon à pivoter l'une par rapport à l'autre lors des variations de hauteur du train.

De plus, le dispositif se caractérise en ce que la cartouche cylindrique est solidaire d'une chape articulée sur un axe mobile reliant les seconds moyens élastiques aux premiers moyens élastiques.

Le dispositif se caractérise encore en ce qu'il comprend en outre des moyens de réglage en hauteur de la suspension, ces moyens de réglage étant actionnés en agissant sur la molette du corps précité.

Par ailleurs, le dispositif se caractérise en ce que les moyens de réglage comportent un joint torique monté sur la tige de commande et agissant somme un organe d'immobilisation ou de freinage de ladite molette.

On notera ici que l'invention a aussi pour objet une suspension mixte pour train arrière de véhicule automobile, et du type comportant un ressort métallique de suspension, un élément porteur raccordé à un accumulateur hydropneumatique et un correcteur hydraulique de hauteur équipé d'un dispositif automatique de commande de correction de hauteur qui permet de maintenir le train à une hauteur constante, quelle que soit la charge appliquée à ce train.

D'autres caractéristiques et avantages de l'invention seront mieux compris à la lecture de la description détaillée d'un mode de réalisation, donnée uniquement à titre d'exemple, qui suit et qui se réfère aux dessins annexés dans lesquels:
La figure 1 est une vue partielle et en coupe d'un train arrière de véhicule équipé de suspensions mixtes conformes à la présente invention.
La figure 2 est une vue agrandie et en coupe suivant la ligne II-II de la figure 1, d'un dispositif de commande de correcteur de hauteur de suspension.
La figure 3 est une vue agrandie et suivant la flèche III de la figure 2 du dispositif de commande.
La figure 4 est une vue en coupe suivant la ligne IV-IV de la figure 3.

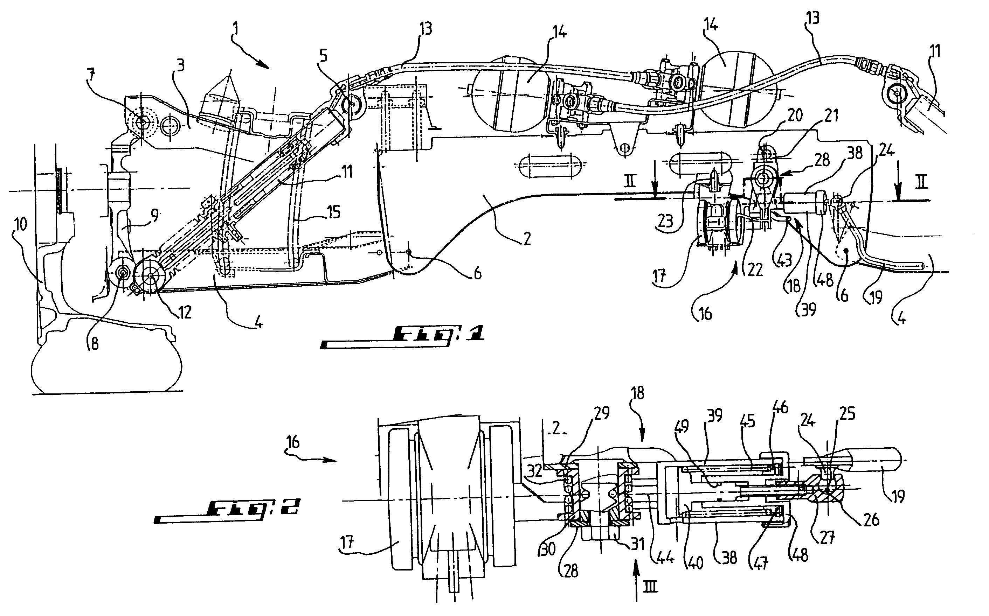

En se reportant tout d'abord à la figure 1, on voit que la référence générale 1 désigne un train ou essieu arrière de véhicule automobile (non représenté).

Bien que l'essieu arrière 1 ne soit pas entièrement représenté sur les figures, on comprend bien que celui-ci est constitué principalement par une traverse centrale 2, à chaque extrémité latérale de laquelle est montée une paire de bras ou triangles de suspension. Chaque paire de bras de suspension comprend un triangle supérieur 3 et un triangle inférieur 4 qui sont respectivement articulés sur la traverse 2, par l'intermédiaire d'axes sensiblement horizontaux 5 et 6.

A l'extrémité libre de chacun des triangles supérieur et inférieur 3 et 4 sont prévus des axes de rotation 7 et 8 respectivement, par l'intermédiaire desquels un support de moyeu 9 est monté de façon a permettre un débattement par rapport à la traverse 2. Une roue arrière 10 est montée pivotante sur le support de moyeu 9.

Un élément porteur hydropneumatique 11 est monté incliné entre le triangle inférieur 4 et la traverse centrale 2. L'extrémité supérieure de l'élément porteur 11 est montée pivotante sur la traverse 2, tandis que l'extrémité inférieure de l'élément porteur 11 est montée pivotante autour d'un axe 12, fixé sur le triangle inférieur 4 à proximité du support de moyeu 9. Chacun des éléments porteurs 11 est raccordé, par l'intermédiaire de conduites flexibles 13, à un accumulateur hydropneumatique 14. Chaque accumulateur hydropneumatique 14 est fixé sur la traverse 2.

On remarque par ailleurs sur la figure 1 qu'un ressort métallique hélicoïdal 15 est monté entre d'une part le triangle inférieur 4 et la caisse (non représentée) du véhicule.

L'ensemble formé par les triangles inférieur et supérieur 4 et 3, le porte-moyeu 9, les éléments porteurs 11 et les ressorts hélicoïdaux 15 compose, avec les accumulateurs hydropneumatiques 14, la suspension du train arrière 1.

Suivant l'exemple illustré la suspension mixte représentée sur la figure 1 possède un débattement supérieur en détente qu'en attaque.

On a représenté à droite sur la figure 1 un dispositif de commande de correction 16 pour ajuster la hauteur des suspensions et qui est fixé sur la traverse centrale 2. Ce dispositif 16 est constitué par un tiroir temporisé de correction de hauteur 17, un moyen de transmission élastique 18, et un organe ou levier de commande 19. Le tiroir temporisé 17 est fixé sur la traverse centrale 2 à l'aide d'une vis 23 et est raccordé par des conduites (non représentées) aux accumulateurs hydropneumatiques 14. Le moyen élastique de transmission 18 est également monté sur la traverse centrale 2 à l'aide notamment d'une vis de fixation 20 qui permet le serrage d'une patte de montage 21 solidaire du moyen de transmission 18. Le moyen élastique de transmission 18 est d'une part raccordé à un levier mobile 22 de forme coudée du tiroir temporisé 17, et est d'autre part relié à l'organe de commande 19, qui est lui-même solidaire des mouvements de débattement de l'un des triangles inférieurs de suspension 4, et donc de la roue.

On comprend déjà que grâce au dispositif de commande 16, chaque mouvement de débattement de la suspension du train arrière 1 est détecté et transmis, à l'aide du moyen élastique 18, au tiroir temporisé de correcteur 17, qui peut alors agir, après une durée prédéterminée, sur les accumulateurs hydropneumatiques 14 afin d'ajuster la hauteur - c'est-à-dire la longueur d'entraxe - des éléments porteurs 11, en fonction de la charge appliquée au train arrière 1.

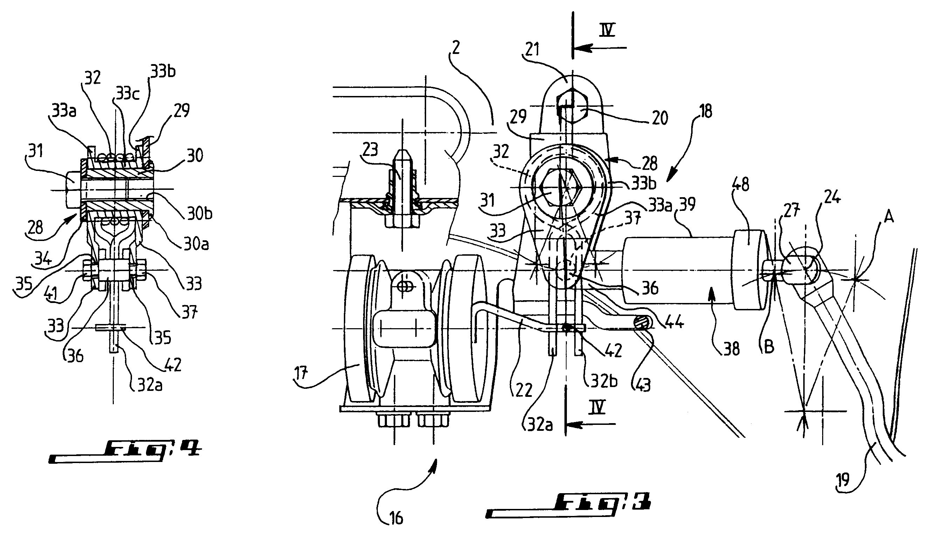

Maintenant, en se reportant plus particulièrement aux figures 2 à 4, le dispositif automatique de commande conforme à l'invention va être décrit.

Comme on le voit bien sur la figure 2, l'organe de commande 19 est raccordé au moyen élastique 18 par une rotule 24. Plus précisément, la rotule 24 est constituée par un doigt à extrémité sphérique 25 fixé à l'extrémité de l'organe 19. Ce doigt 25 vient se loger dans une portée sphérique 26 formée à l'extrémité d'une tige de commande 27 des moyens élastiques 18. Grâce à la rotule 24, le levier de commande 19 peut transmettre les déplacements du triangle de suspension 4 au moyen élastique 18 tout en limitant les efforts dus aux imprécisions d'alignement lors du débattement.

Suivant l'invention, les moyens de transmission 18 sont constitués par des premiers et seconds moyens élastiques précontraints, qui sont respectivement référencés en 28 et 38. Ces premiers et seconds moyens élastiques précontraints 28 et 38 sont montés en série, à savoir avec les seconds moyens élastiques 38 reliés d'une part à l'organe de commande 19 par l'intermédiaire de la tige de commande 27, et d'autre part aux premiers moyens élastiques 28, qui sont eux-mêmes raccordés au tiroir 17 par le levier coudé 22.

On voit sur les figures 3 et 4 que les premiers moyens élastiques 28 sont essentiellement constitués par une platine de support 29 sur laquelle une douille 30, une vis 31 et un premier ressort précontraint 32 sont coaxialement montés. La platine de support 29 est fixée par la vis 20 sur la traverse centrale 2 de façon à s'étendre sensiblement à la verticale et parallèlement à la paroi transversale de la traverse 2 sur laquelle cette platine 29 est fixée. La douille 30 est logée dans un perçage de la platine de support 29 de manière à s'étendre perpendiculairement à celle-ci, avec un épaulement 30a de la douille venant en appui contre la platine 29, au regard de la traverse centrale 2. Une came 33 constituée de deux pattes oblongues 33a, 33b (figure 3) reliées l'une à l'autre par une partie cylindrique 33c (figure 4) est montée à pivot sur la douille 30. La came 33 présente en section transversale (figure 4) la forme d'un H et est maintenue en position à l'aide d'une rondelle 34 reposant sur une extrémité de la douille en saillie de la came 33 et est fixée par serrage de la vis 31 dans un filetage 30b de la douille 30. Les deux pattes oblongues 33a, 33b de la came 33 comportent chacune, au niveau de leurs parties excentrées par rapport à la douille 30 qui forment les deux branches inférieures du H sur la figure 4, un perçage 35. Les deux perçages 35 sont disposés au regard l'un de l'autre de façon à permettre le montage d'un galet cylindrique 36. Le galet cylindrique 36 est monté sur une vis 37 s'étendant au travers des perçages 35, et sur laquelle est serré un écrou 41.

Le premier ressort précontraint 32 est un ressort hélicoïdal de flexion monté pivotant par enroulement autour de la partie cylindrique de la came 33. En conséquence, la douille 30 et la vis 31 qui sont fixées sur la platine de support 29 constituent un axe fixe pour ce premier ressort 32.

On remarque sur la figure 3 que les deux extrémités du premier ressort 32 sont croisées et s'étendent en saillie de l'hélice enroulée autour de la partie cylindrique de la came 33 de manière à former deux branches 32a et 32b. Les deux branches 32a et 32b s'étendent suivant un plan parallèle aux deux pattes oblongues de la came 33 et parallèlement l'une à l'autre, de façon à enserrer tout d'abord le galet cylindrique 36 et, au niveau de leurs extrémités, une goupille 42 fixée à l'extrémité du levier coudé 22 du tiroir 17.

Il convient de préciser ici que le galet cylindrique 36 enserré entre les branches 32a, 32b du premier moyen élastique 28 sert quant à lui d'axe mobile et permet de relier en série les premiers moyens élastiques aux seconds moyens élastiques 38. Il apparaît maintenant de façon évidente que si la suspension du train arrière 1 fonctionne en attaque -c'est-à-dire si la triangulation de ce train s'écrase- l'organe de commande 19 et les seconds moyens élastiques 38 vont transmettre aux premiers moyens élastiques 28 un effort qui va avoir tendance, par l'intermédiaire du galet cylindrique 36, à écarter la branche 32a de la branche 32b des premiers moyens élastiques 28. Ainsi, quand la suspension du train arrière 1 travaille en attaque et s'écrase, la branche 32a est poussée par le galet cylindrique 36 et fait pivoter le premier ressort précontraint 32 dans le sens des aiguilles d'une montre sur la figure 3. Sous l'effet d'une telle sollicitation, le premier ressort précontraint 32 oppose une résistance à sa déformation qui permet à la seconde branche 32b de venir en appui contre la goupille 42, de façon à déplacer le levier coudé 22 du tiroir 17 de droite à gauche sur la figure 3. A l'inverse, lorsque la suspension du train arrière 1 travaille en détente, le galet cylindrique 36 exerce sur la branche 32b un effort permettant de faire pivoter le premier ressort 32 dans le sens trigonométrique pour que la branche 32a puisse venir exercer sur la goupille 42 un effort apte à déplacer le levier coudé 22 du tiroir 17 de gauche à droite sur la figure 3.

Il convient toutefois de noter ici que dans le cas ou la suspension travaille en détente, la course de déformation des premiers moyens élastiques précontraints 28 est limitée par une tige 43 soudée sur la platine 29 et dont l'extrémité coudée vient au regard des branches 32a et 32b de manière à constituer une butée.

En se reportant maintenant à la figure 2, nous allons décrire les seconds moyens élastiques 38. Ces seconds moyens élastiques 38 sont essentiellement constitués par un corps 39 en forme de capsule ou cartouche cylindrique. Ce corps 39 est relié au galet cylindrique 36 qui forme un axe mobile par l'intermédiaire d'une chape 44 intégrée à celui-ci. La tige de commande 27 s'étend à l'intérieur du corps 39 et comporte, à son extrémité opposée à la rotule 24, un épaulement 40 de forme circulaire qui est monté coulissant à l'intérieur du corps 39. Un second ressort hélicoidal précontraint 45 est logé à l'intérieur du corps 39, coaxialement à la tige 27. On notera ici que la précontrainte de ce second ressort hélicoîdal est supérieure à celle du ressort 32 des premiers moyens élastiques. L'une des extrémités du ressort précontraint 45 vient en appui contre l'épaulement circulaire 40 de la tige 27, tandis que son autre extrémité -c'est-à-dire celle qui est la plus proche de la rotule 24- est en appui contre une rondelle d'arrêt 46, elle-même fixée à l'intérieur du corps 39 à l'aide d'une bague d'arrêt 47.

Une molette de réglage 48 est vissée sur la tige de commande 27 de façon à venir en appui, sous l'effet du second ressort 45, contre l'extrémité du corps 39 qui est la plus proche de l'organe de commande 19. Grâce à ce montage par vissage, il est possible en faisant tourner la molette 48 de déplacer suivant sa direction axiale la tige 27, le correcteur de hauteur agit sur l'élément porteur 11 et la rotule 24 trouve une position qui remet le tiroir du correcteur au repos. On a ainsi obtenu un moyen de réglage en hauteur de la suspension qui peut être aisément actionné, en agissant sur la molette 48.

On remarque également sur la figure 2 que la tige 27 est pourvue d'une gorge circulaire dans laquelle est logé un joint torique 49 en élastomère ou plastique. Ce joint torique 49 fait saillie de la tige 27 de façon à venir en contact avec la partie cylindrique interne de la molette 48, de sorte que ce joint torique 49 peut agir comme un organe d'immobilisation ou de freinage de la tige 27 par rapport à la molette 48. La position de réglage en hauteur de la suspension obtenue en faisant tourner la molette de réglage 48 dans un sens ou dans l'autre, de façon à allonger ou raccourcir la longueur de la capsule cylindrique 39 peut être ainsi maintenue de façon simple et efficace.

Il ressort de façon évidente au vu de la figure 2 que si la suspension du train arrière 1 travaille en attaque -c'est-à-dire si la rotule 24 se déplace de droite à gauche sur les dessins-, alors les seconds moyens élastiques 38 travaillent dans le sens de leur détente, avec la molette 48 venant en appui contre l'extrémité du corps 39. Ainsi, lorsque les seconds moyens élastiques 38 sont au repos, l'extrémité de la cartouche cylindrique 39 fait office de butée.

Avant d'expliquer le fonctionnement proprement dit du dispositif de commande conforme à l'invention, il convient tout d'abord de préciser que si la suspension du train arrière 1 travaille en attaque, le tiroir temporisé 17 provoque, après un temps de temporisation donné, une admission de fluide vers les éléments porteurs 11. Par ailleurs, si la suspension du train arrière 1 fonctionne en détente, le tiroir du correcteur 17 se place, après le temps de temporisation, dans une position suivant laquelle le fluide d'amortissement peut s'échapper des éléments porteurs 11 pour se diriger, au travers des conduites flexibles 13, vers les accumulateurs hydropneumatiques 14.

Lorsque l'on charge le véhicule, les suspensions du train arrière 1 travaillent en attaque de sorte que les triangles inférieurs 4 tournent autour de leurs axes 6 en entraînant le levier de commande 19 de façon que la rotule 24 se déplace, comme représenté sur la figure 3, dans le sens allant d'une position dite de charge minimale et repérée en A, vers une position dite de charge maximale qui est repérée en B. Ce déplacement de la rotule 24 provoque une poussée sur la capsule 39 et entraîne, comme on l'a expliqué plus haut, par l'intermédiaire de la branche 32a et de la goupille 42, le deplacement du levier coudé 22, de manière à placer le tiroir temporisé du correcteur 17 dans sa position d'admission de fluide, après le temps de temporisation.

A l'inverse, si l'on décharge le véhicule, les triangles inférieurs 4 se mettent à tourner en entraînant l'organe de commande 19 de façon à déplacer la rotule 24 dans un sens allant de la position B vers la position A. Ce déplacement de la rotule 24 provoque une traction sur le corps cylindrique 39 qui entraîne la branche 32b du premier ressort précontraint 32 par l'intermédiaire du galet cylindrique 36. Le tiroir du correcteur de hauteur 17 se met dans sa position d'échappement de fluide après l'écoulement du temps de temporisation. Puisque le débattement en détente est beaucoup plus important que le débattement en attaque, le premier ressort précontraint ne peut pas répondre au déplacement de l'organe de commande 19 sur la totalité de sa course, de part ses caractéristiques mécaniques. Le premier ressort précontraint 32 est dans ce cas limité au maximum de ses possibilités par la butée 43. Le restant de la course est assuré par l'écartement de la molette 48 à distance du corps cylindrique 39 lorsque le premier ressort de commande vient en butée. On comprend donc que c'est alors les seconds moyens élastiques 38 qui prennent le relais des premiers moyens élastiques 28 pour assurer le reste de la course en détente du dispositif de commande.

On a donc réalisé conformément à l'invention un dispositif de commande de hauteur qui permet, grâce aux premiers et seconds moyens élastiques qui opposent des efforts appropriés sur toute la course d'attaque et de détente, d'obtenir avec précision une correction de hauteur quelle que soit la valeur du débattement de la roue et dont les caractéristiques mécaniques restent compatibles avec le débattement total de la suspension.

En outre, le dispositif conforme à l'invention a pour avantage de pouvoir être adapté à toutes sortes de suspensions de véhicule, quelle que soit la valeur de leur débattement en attaque ou en détente.

Bien entendu, l'invention n'est nullement limitée au mode de réalisation qui vient d'être décrit en se reportant aux figures, mais elle comprend également tous les équivalents des moyens décrits ainsi que leurs combinaisons, si ceux-ci sont effectués suivant l'objet des revendications

## Revendications

1. Dispositif automatique de commande d'un correcteur hydraulique de hauteur d'une suspension de train arrière de véhicule automobile, du type comprenant un tiroir temporisé (17) de correction de la hauteur du train (1), et un organe ou levier (19) raccordé d'une part au tiroir (17) par l'intermédiaire de moyens élastiques precontraints (18), et d'autre part à un élément (4) de la suspension solidaire d'une roue (10), de façon que le tiroir est déplacé pour les variations de hauteur de longue durée de la suspension, caractérisé en ce que les moyens élastiques (18) comprennent des premiers (28) et des seconds moyens élastiques (38) précontraints, et ayant une déformation limitée par des butées (39, 43) ou analogues, la précontrainte des premiers moyens élastiques (28) étant inférieure à celle des seconds moyens élastiques (38).

2. Dispositif selon la revendication 1, caractérisé en ce que les premiers (28) et les seconds moyens élastiques (38) sont montés en série.

3. Dispositif selon la revendication 2, caractérisé en ce que les premiers moyens élastiques (28) sont constitués par un ressort de flexion (32) hélicoîdal monté autour d'un axe fixe (30, 31) par enroulement et dont les extrémités (32a, 32b) sont croisées et enserrent d'une part un axe mobile (36) relié aux seconds moyens élastiques (38) et d'autre part un levier coudé (22) solidaire du tiroir temporisé (17).

4. Dispositif selon l'une quelconque des revendications 1 à 3, caractérisé en ce que lesdites butées (43) limitent la course de déformation des premiers moyens élastiques (28) dans le sens de la détente de la suspension, et les seconds moyens élastiques (38) sont montés de manière à se détendre lorsque la suspension travaille en attaque, les butées (39) limitant la course de déformation des seconds moyens (38) dans le sens de leur détente.

5. Dispositif selon l'une quelconque des revendications 1 à 4, caractérisé en ce que les seconds moyens élastiques (38) comprennent un corps (39) en forme de capsule ou cartouche cylindrique, à l'intérieur de laquelle une tige de commande (27) raccordée au levier précité (19) est montée coulissante, un second ressort précontraint (45) qui est logé dans la cartouche cylindrique (39) avec l'une de ses extrémités reposant sur la tige (27) et son autre extrémité venant en appui sur une rondelle d'arrêt (46) fixée à l'intérieur de la cartouche (39), ainsi qu'une molette (48) vissée sur la tige de commande (27) et venant, lorsque ledit second moyen élastique (38) est au repos, en butée contre ledit corps (39).

6. Dispositif selon la revendication 5, caractérisé en ce que la tige de commande (27) et le levier (19) précités sont raccordés par l'intermédiaire d'une rotule (24), de façon à pivoter l'un par rapport à l'autre lors des variations de hauteur du train.

7. Dispositif selon la revendication 5 ou 6, caractérisé en ce que la cartouche cylindrique (39) est solidaire d'une chape (44) articulée sur un axe mobile reliant les seconds moyens élastiques (38) aux premiers moyens élastiques (28).

8. Dispositif selon l'une des revendications 5 à 7, caractérisé en ce qu'il comprend en outre des moyens de réglage en hauteur (48, 27) de la suspension, ces moyens de réglage étant actionnés en agissant sur la molette (48) du corps précité (39).

9. Dispositif selon la revendication 8, caractérisé en ce que lesdits moyens de réglage (48, 27) comportent un joint torique (49) monté sur la tige de commande (27) et agissant comme un organe d'immobilisation ou de freinage de ladite molette (48).

10. Suspension mixte pour un train arrière de véhicule automobile et du type comportant un ressort métallique de suspension (15), un élément porteur (11) raccordé à un accumulateur hydropneumatique (14) et un système de correction de hauteur hydraulique équipé d'un dispositif automatique de commande de correction de hauteur selon l'une quelconque des revendications 1 à 9, ce dispositif permettant de maintenir le train (1) à une hauteur constante, quelle que soit la charge appliquée à ce train.

## Claims

1. Automatic device for the control of a hydraulic corrector of the height of a suspension of the rear wheel axle set of an automotive vehicle, of the type comprising a time-lag spool (17) for the correction of the height of the wheel axle set (1) and a member or lever (19) connected on the one hand to the spool (17) through the medium of prestressed elastic means (18) and on the other hand to an element (4) of the suspension made fast to one wheel (10), so that the spool is displaced for the variations in height of long duration of the suspension, characterized in that the elastic means (18) comprise first and second prestressed elastic means (28) and (38) having a deformation limited by stops (39, 43) or the like, the prestressing of the first elastic means (28) being lower than that of the second elastic means (38).

2. Device according to claim 1, characterized in that the first and the second elastic means (28) and (38) are mounted in series.

3. Device according to claim 2, characterized in that the first elastic means (28) are constituted by a helical bending spring (32) mounted by being wound about a stationary axis (30, 31) and the ends (32a, 32b) of which are crossed and gripping round on the one hand a movable axis (36) connected to the second elastic means (38) and on the other hand by a bent lever (22) made fast to the time- lag spool (17).

4. Device according to any one of claims 1 to 3, characterized in that the said stops (43) limit the deformation stroke of the first elastic means (28) in the direction of expansion of the suspension and the second elastic means (38) are mounted so as to expand when the suspension is drivingly working, the stops (39) limiting the deformation stroke of the second means (38) in the direction of their expansion.

5. Device according to any one of claims 1 to 4, characterized in that the second elastic means (38) comprise a body (39) in the shape of a cylindrical capsule or cartridge inside of which a control rod (27) connected to the aforesaid lever (19) is slidably mounted, a second prestressed spring (45) which is accommodated in the cylindrical cartridge (39) with one of its ends resting upon the rod (27) and its other end bearing upon a stop washer (46) fastened inside of the cartridge (39) as well as a serrated cap (48) screwed onto the control rod (27) and caused, when the said second elastic means (38) is at rest, to come into abutment against the said body (39).

6. Device according to claim 5, characterized in that the aforesaid control rod (27) and lever (19) are connected through the medium of a ball-and-socket joint (24) so as to pivot with respect to each other during the variations in height of the wheel axle set.

7. Device according to claim 5 or 6, characterized in that the cylindrical cartridge (39) is made fast to a yoke (44) pivoted to a movable axis connecting the second elastic means (38) to the first elastic means (28).

8. Device according to one of claims 5 to 7, characterized in that it moreover comprises means for adjusting the suspension in height (48, 27), these adjusting means being actuated by acting upon the serrated cap (48) of the aforesaid body (39).

9. Device according to claim 8, characterized in that the said adjusting means (48, 27) comprise a torus-shaped joint (49) mounted onto the control rod (27) and acting as a member for holding against motion or for braking the said serrated cap (48).

10. Combined suspension for a rear wheel axle set of an automotive vehicle and of the type comprising a metal suspension spring (15), a carrier element (11) connected to a hydropneumatic accumulator (14) and a system for hydraulic height correction fitted with an automatic device for the height correction control according to any one of claims 1 to 9, this device permitting to maintain the wheel axle set (1) at a constant height whatever the load applied to this wheel axle set may be.

## Patentansprüche

1. Automatische Vorrichtung zur Steuerung eines hydraulischen Berichtigungsgerätes für die Höhenlage einer hinteren Radachssatzaufhängung eines Kraftfahrzeuges, derjenigen Gattung mit einem verzögerten Schieber (17) zur Berichtigung der Höhenlage des Radachssatzes (1) und einem einerseits mit dem Schieber (17) über vorgespannte elastische Mittel (18) und andererseits mit einem mit einem Rad (10) fest verbundenen Aufhängungselement (4) verbundenen Glied bzw. Hebel (19), so dass der Schieber bei Höhenlagenveränderungen langer Dauer der Aufhängung verschoben wird, dadurch gekennzeichnet, dass die elastischen Mittel (18) erste und zweite vorgespannte elastische Mittel (28) und (38) mit einer durch Anschläge (39, 43) oder dergleichen begrenzten Verformung aufweisen, wobei die Vorspannung der ersten elastischen Mittel (28) niedriger als diejenige der zweiten elastischen Mittel (38) ist.

2. Vorrichtung nach Anspruch 1, dadurch gekennzeichnet, dass die ersten und zweiten elastischen Mittel (28) und (38) in Reihenfolge angeordnet sind.

3. Vorrichtung nach Anspruch 2, dadurch gekennzeichnet, dass die ersten elastischen Mittel (28) durch eine durch Wickelung um einen ortsfesten Bolzen (30, 31) herum angeordnete Wendelbiegungsfeder gebildet werden, deren Enden (32a, 32b) gekreuzt sind und einerseits einen mit den zweiten elastischen Mitteln (38) bewegbaren Bolzen (36) und andererseits einen mit dem verzögerten Schieber (17) fest verbundenen abgewinkelten Hebel (22) umspannen.

4. Vorrichtung nach irgendeinem der Ansprüche 1 bis 3, dadurch gekennzeichnet, dass die besagten Anschläge (43) den Verformungshub der ersten elastischen Mittel (28) in der Entspannungsrichtung der Aufhängung begrenzen und die zweiten elastischen Mittel (38) derart angeordnet sind, dass sie sich entspannen, wenn die Aufhängung im Angriff arbeitet, wobei die Anschläge (39) den Verformungshub der zweiten Mittel (38) in der Richtung deren Entspannung begrenzen.

5. Vorrichtung nach irgendeinem der Ansprüche 1 bis 4, dadurch gekennzeichnet, dass die zweiten elastischen Mittel (38) einen Körper (39) in der Gestalt einer zylindrischen Kapsel bzw. Patrone, innerhalb welcher eine mit dem vorgenannten Hebel (19) verbundene Betätigungsstange (27) gleitbar angeordnet ist, eine zweite vorgespannte Feder (45), die in der zylindrischen Patrone (39) untergebracht ist und mit einem ihrer Enden auf der Stange (27) ruht und mit ihrem anderen Ende sich an einer innerhalb der Patrone (39) befestigten Sicherungsscheibe (46) abstützt, sowie eine auf der Betätigungsstange (27) aufgeschraubte und, wenn das besagte zweite elastische Mittel (38) im Ruhezustand ist, in Anschlag an dem besagten Körper (39) kommende gerändelte Kappe (48) umfassen.

6. Vorrichtung nach Anspruch 5, dadurch gekennzeichnet, dass die vorgenannte Bestätigungsstange (27) und der vorgenannte Hebel (19) über ein Kugelgelenk (24) verbunden sind, um während der Höhenlagenänderungen des Radachssatzes in bezug aufeinander zu schwenken.

7. Vorrichtung nach Anspruch 5 oder 6, dadurch gekennzeichnet, dass die zylindrische Patrone (39) mit einem an einem die zweiten elastischen Mittel (38) mit den ersten elastischen Mitteln (28) verbindenden bewegbaren Bolzen angelenkten Gabelbügel (44) fest verbunden ist.

8. Vorrichtung nach einem der Ansprüche 5 bis 7, dadurch gekennzeichnet, dass sie ausserdem Mittel zur Einstellung der Höhenlage (48, 27) der Aufhängung aufweist, wobei diese Einstellmittel durch Einwirkung auf die gerändelte Kappe (48) des vorgenannten Körpers (39) betätigt werden.

9. Vorrichtung nach Anspruch 8, dadurch gekennzeichnet, dass die besagten Einstellmittel (48, 27) eine an der Betätigungsstange (27) angeordnete und als Glied zur Festhaltung bzw. Bremsung der besagten gerändelten Kappe (48) wirkende torische Dichtung (49) aufweisen.

10. Verbundaufhängung für einen hinteren Radachssatz eines Kraftfahrzeuges, derjenigen Gattung mit einer metallischen Aufhängungsfeder (15), einem mit einem hydropneumatischen Speicher (14) verbundenen Tragelement (11) und einem mit einer automatischen Steuervorrichtung zur Höhenlagenberichtigung nach irgendeinem der Ansprüche 1 bis 9 ausgerüsteten hydraulischen Höhenlagenberichtigungssystem, wobei diese Vorrichtung es gestattet, den Radachssatz (1) in einer konstanten Höhe zu halten, was auch die an diesem Radachssatz angelegte Last sein mag.
